## Europäisches Patentamt
## European Patent Office
## Office européen des brevets

(11) Veröffentlichungsnummer: **0 182 229 B1**

(12) **EUROPÄISCHE PATENTSCHRIFT**

(45) Veröffentlichungstag der Patentschrift: **25.04.90**

(21) Anmeldenummer: **85114253.9**

(22) Anmeldetag: **08.11.85**

(51) Int. Cl.⁵: **A 01 B 59/048,** B 62 D 49/08, B 62 D 49/06

(54) **Arbeitsfahrzeug, insbesondere Ackerschlepper mit einer Anschluss- und Kupplungsvorrichtung zum frontseitigen Anbau.**

(30) Priorität: **22.11.84 DE 3442557**

(43) Veröffentlichungstag der Anmeldung:
**28.05.86 Patentblatt 86/22**

(45) Bekanntmachung des Hinweises auf die Patenterteilung:
**25.04.90 Patentblatt 90/17**

(84) Benannte Vertragsstaaten:
**AT BE CH DE FR GB IT LI NL SE**

(56) Entgegenhaltungen:
**DE-A-2 232 736**
**DE-B-1 124 284**
**GB-A-2 026 409**
**US-A-2 505 280**
**US-A-2 762 283**
**US-A-3 595 410**

(73) Patentinhaber: **DEERE & COMPANY**
**1 John Deere Road**
**Moline, Illinois 61265 (US)**

(72) Erfinder: **Stuhrmann, Heinz, Dr. Dipl.-Ing.**
**Marstallstrasse 32**
**D-6830 Schwetzingen (DE)**
Erfinder: **Kryscyk, Robert, Ing. grad.**
**Hockenheimer Strasse 153**
**D-6834 Ketsch (DE)**

(74) Vertreter: **Feldmann, Bernhard et al**
**DEERE & COMPANY European Office, Patent Department Steubenstrasse 36-42 Postfach 503**
**D-6800 Mannheim 1 (DE)**

Courier Press, Leamington Spa, England.

**Beschreibung**

Die Erfindung betrifft ein Arbeitsfahrzeug, insbesondere Ackerschlepper, mit einer Anschluß- und Kupplungsvorrichtung zum frontseitigen Anbau, die mindestens einen als Hubarm ausgebildeten, vertikal schwenkbaren Winkelhebel aufweist, an dessen einem Schenkel eine anderenends am Arbeitsfahrzeug angeschlossene Betätigungsvorrichtung angreift, wobei das Arbeitsfahrzeug einen Rahmen mit Führungsbahnen aufweist, an denen ein Geräte, Gewichte oder dergleichen aufnehmender Zusatzrahmen über an ihm vorgesehene Führungsgegenstücke durch Verbinden mit dem anderen Schenkel des Winkelhebels höhenverstellbar ist.

Diese bekannte Anschluß- und Kupplungsvorrichtung (US—A—2,762,283) ist als eine einfache Zwei-Punkt-Gerätekupplung mit einem Winkelhebel und einer Betätigungseinrichtung ausgebildet. Die Gerätekupplung weist Führungsbahnen für einen Rahmen auf, der mit Geräten verbindbar und über den Winkelhebel durch die Betätigungseinrichtung bewegbar ist.

Diese Anschluß- und Kupplungsvorrichtung weist eine Vielzahl von Einzelteilen auf, die lediglich für den einzigen Zweck benutzt werden können, ein anzubauendes Gerät, beispielsweise ein Mähwerk, vom Boden anzuheben, es zu tragen oder auf diesen abzusetzen.

Die der Erfindung zugrunde liegende Aufgabe wird darin gesehen, eine derartige Anschluß- und Kupplungsvorrichtung so weiterzubilden, daß wenigstens einige ihrer Einzelteile noch für einen anderen Zweck benutzt werden können.

Eine weitere Anschluß- und Kupplungsvorrichtung (EP—B1—0 012 780) besteht aus einem einen Vorderteil eines Ackerschleppers teilweise umgebenden Hauptrahmen, der an seinen beiden Seiten jeweils mit einem unteren Lenker, einem Winkelhebel, einer Hubstrebe, einem Hydraulikzylinder und zwischen seinen beiden Seiten einem oberen Lenker besteht. Dabei ist die Hubstrebe zwischen dem einen Schenkel des Winkelhebels und dem unteren Lenker und der Hydraulikzylinder zwischen dem anderen Schenkel und dem Hauptrahmen vorgesehen. Der Hydraulikzylinder ist einseitig mit Druckmittel beaufschlagbar und dient lediglich dem Verschwenken des Winkelhebels und somit dem Verschwenken des unteren Lenkers, wodurch ein gegebenenfalls an die unteren und den oberen Lenker angeschlossenes Gerät vom Boden angehoben wird.

Eine andere bekannte Anschluß- und Kupplungsvorrichtung (EP—A—0 083 146) weist zwar bereits die Möglichkeit auf, die Betätigungseinrichtung sowohl zum Verstellen von unteren Lenkern als auch zum senkrechten Anheben eines Gewichtes zu nutzen, jedoch sind die Betätigungseinrichtung und das Gewicht innerhalb eines vorderen Endbereiches eines Ackerschleppers angeordnet und somit weder von außen zugänglich noch für irgendeinen anderen Zweck als zum Anheben eines direkt unterhalb der Anschluß- und Kupplungsvorrichtung abgelegten Gewichtes geeignet. Außerdem läßt die Bauart dieser Anschluß- und Kupplungsvorrichtung weitere Einsatzmöglichkeiten nicht zu.

Eine andere Anschluß- und Kupplungsvorrichtung (DE—A—2 804 129) weist eine mit einem Zusatzrahmen verbundene Dreipunktkupplung auf, die in einem Rahmen auf- und abbewegbar und mit dem Rahmen gegenüber dem Arbeitsfahrzeug verschwenkbar ist. Das Arbeitsfahrzeug ist in diesem Falle ein Portalschlepper zum Pflegen von hohen Pflanzen, und die gesamte Anschluß- und Kupplungsvorrichtung ist nur deshalb in der beschriebenen Art ausgebildet, um die Aufnahme von Geräten vom Boden aus mit der Dreipunktkupplung zu ermöglichen. Eine weitere Funktion ist den Einzelteilen wie auch der gesamten Anschluß- und Kupplungsvorrichtung nicht zuzuordnen.

Schließlich ist eine ganz andere Anschluß- und Kupplungsvorrichtung bekannt (DE—A—2 927 736), die dem Anschließen eines Gewichtes an einen Ackerschlepper dient und hierzu einen frontseitig und einen heckseitig an dem Ackerschlepper angebrachten Rollenträger besitzt. In die Rollenträger ist eine sich längs unter dem Ackerschlepper erstreckende Platte mit dem Gewicht verschiebbar gelagert, die über Hydraulikzylinder längs und quer zu dem Ackerschlepper mit dem Gewicht verschiebbar ist. Die Platte muß jedoch zunächst erst über mehrere Wagenheber in die Aufnahmehöhe der Rollenträger gehoben werden, bevor sie in diese eingeführt werden kann. Die Anschluß- und Kupplungsvorrichtung kann ebenfalls nur zum Anschließen einer derartigen Platte mit einem Gewicht verwendet werden.

Die der Erfindung zugrunde liegende Aufgabe ist durch die Merkmale des kennzeichnenden Teil des Patentanspruchs 1 auf erfinderische Weise gelöst worden.

Auf diese Weise ist es gelungen, zumindest die Betätigungseinrichtung und den Winkelhebel für eine weitere Aufgabe nutzbar zu machen. Da der Zusatzrahmen somit höhenverstellbar ist, kann mit diesem beispielsweise ein Faß mit Schädlingsbekämpfungsmittel oder Düngemittel aufgenommen und an der Vorderseite des Ackerschleppers während der Feldarbeit getragen werden. Es kann ferner anstatt eines Gerätes ein Gewicht zur Ballastierung des Ackerschleppers vom Boden angehoben und in eine Transportstellung an dem Arbeitsfahrzeug gebracht werden. Dabei ist es belanglos, ob das Gewicht oder mehrere zu einem Gewicht zusammengefaßte Gewichtsplatten bereits vor dem Anheben des Zusatzrahmens in diesen eingesetzt oder eingehängt werden oder erst wenn der Zusatzrahmen schon in seine Transportstellung angehoben ist. Die Ausbildung des Zusatzrahmens kann dabei den jeweiligen Geräten oder dem Gewicht angepaßt werden und ist nicht an bereits genormte Maße wie etwa bei einer Dreipunktgerätekupplung gebunden.

In weiterer Ausgestaltung der Erfindung wird das Aufnehmen eines Gewichtes dadurch vereinfacht, daß der Zusatzrahmen in einem Gewicht integriert ist, so daß etwa ein ganzer Block mit

2

dem Zusatzrahmen aus Stahl oder Beton gegossen werden kann, was zu einer beträchtlichen Kosteneinsparung führt. Es können aber auch mehrere Einzelgewichte zu einem Gesamtgewicht zusammengefaßt und so untereinander verbunden werden, daß sich aus der Art der Verbindung der Zusatzrahmen ergibt, wobei unter Rahmen allgemein ein Gebilde zu verstehen ist, das dem Zusammenhalten, Umfassen oder Aufnehmen von irgend etwas dient.

Eine sehr günstige Wirkung wird nach einem weiteren erfindungsgemäßen Gedanken dadurch erzielt, daß der Rahmen mit dem Zusatzrahmen gegenüber dem Arbeitsfahrzeug in Richtung der Längsachse des Arbeitsfahrzeuges verschiebbar ist. Die Längsverschiebbarkeit unter Benutzung der ohnehin vorhandenen Anschluß- und Kupplungsvorrichtung ermöglicht es nämlich, den Schwerpunkt des Arbeitsfahrzeuges zu verlagern, so daß dieses nicht so leicht um einen Aufstandspunkt, etwa um Hinterräder, aufbäumt. Die zusätzliche Stabilität des Arbeitsfahrzeuges wird dabei lediglich durch das Verlagern des Gewichtes, nicht aber durch Erhöhen von dessen Masse bewirkt. Die Längsverschiebung könnte etwa über eine zusätzliche Betätigungsvorrichtung oder dadurch bewirkt werden, daß der Rahmen auf einem Schlitten, auf Rollen oder sonstwie verschiebbar gelagert ist.

Eine weitere universelle Verwendbarkeit einer Anschluß- und Kupplungsvorrichtung mit Hubstrebe wird dadurch erreicht, daß die Hubstrebe mit dem Winkelhebel und dem Zusatzrahmen verbindbar ist. Es braucht nämlich dann nur die Hubstrebe z.B. von einem unteren Lenker gelöst und mit dem Zusatzrahmen verbunden zu werden, um die vorteilhafte Wirkung nach diesem erfinderischen Vorschlag zu erzielen. Somit sind von der ursprünglichen Anschluß- und Kupplungsvorrichtung bereits drei Einzelteile, nämlich die Betätigungseinrichtung, der Winkelhebel und die Hubstrebe, für eine weitere Funktion verwendbar, und zwar ohne daß diese geändert werden müßten.

Jedoch sind nicht nur die Einzelteile der Anschluß- und Kupplungsvorrichtung für verschiedene Funktionen geeignet, sondern die Funktion des Tragens und Verlagerns eines Gewichtes oder eines Gerätes und des Anbaues eines Gerätes können gleichzeitig erfolgen, wenn vorgesehen ist, daß der Zusatzrahmen in einer angehobenen Stellung im Rahmen über Sperrmittel festsetzbar und der freie Schenkel des Winkelhebels mit einem unteren einer Lenker Geräteanbauvorrichtung verbindbar ist. Eine nach diesem erfindungsgemäßen Vorschlag vorteilhaft ausgebildete Anschluß- und Kupplungsvorrichtung kann dann gleichzeitig zum Tragen eines Gewichtes und zum Bedienen eines frontseitig an das Arbeitsfahrzeug angebauten Gerätes benutzt werden. Ein derartiger Fall ist denkbar, wenn etwa ein Gerät auf das Feld oder an einen anderen Ort gebracht werden soll, das Gewicht aber nach dem Absetzen des Gerätes für die Stabilität des Arbeitsfahrzeuges erforderlich ist.

Es wäre auch möglich, einen Behälter, etwa gefüllt mit Schädlingsbekämpfungsmittel oder mit Düngemittel, in dem Rahmen festzusetzen und mit der Anschluß- und Kupplungsvorrichtung eine Sämaschine oder eine Bodenbearbeitungsmaschine zu bedienen.

Eine weitere Ausgestaltung der Erfindung wird dadurch erreicht, daß der mit der Betätigungseinrichtung verbundene eine Schenkel über die Hubstrebe mit dem Zusatzrahmen verbindbar ist und der Rahmen über das Verschwenken des Winkelhebels in Richtung der Längsmittelachse des Arbeitsfahrzeuges verschiebbar ist. Auf diese Weise werden die Hubstrebe, die Betätigungseinrichtung und der Winkelhebel für eine dritte Funktion, nämlich das Längsverschieben des Rahmens mit dem Zusatzrahmen und einen eventuell darin befindlichen Gewicht oder Gerät, genutzt. Die Betätigungseinrichtung, der Winkelhebel und die Hubstrebe dienen somit dem Bedienen der Anschluß- und Kupplungsvorrichtung selbst, dem Anheben oder Absenken des Zusatzrahmens und dem Längsverschieben des Rahmens mit dem Zusatzrahmen und einem sich in diesem befindlichen Gerät oder Gewicht.

Bei einer Anschluß- und Kupplungsvorrichtung, bei der die Betätigungseinrichtung ein Hydraulikzylinder ist, ist es von Vorteil, wenn der Hydraulikzylinder doppeltwirkend ausgebildet ist. Dieses erfindungsgemäße Merkmal führt dazu, daß je nach Einsatzbedingung des Arbeitsfahrzeuges, insbesondere eines Ackerschleppers mit einem Vorderradantrieb, das Belastungsverhältnis zwischen rückwärtigen und vorne angetriebenen Rädern variiert und somit den Zugverhältnissen angepaßt werden kann. Weisen etwa die Räder eines Ackerschleppers beim Pflügen bereits einen zu hohen Schlupf auf, so kann durch das Nach-Vorne-Verschieben des Rahmens mit einem Gewicht die Zugkraft der vorderen Räder erhöht werden, währenddessen zur Fahrt auf öffentlichen Straßen der Rahmen mit dem Gewicht zurück in eine dem Ackerschlepper zugelegene Stellung gezogen werden kann.

Der Rahmen wird bei einer Anschluß- und Kupplungsvorrichtung, in einfacher Weise dadurch an dem Arbeitsfahrzeug angebracht, daß er zwei sich in Richtung der Längsmittelachse des Arbeitsfahrzeuges erstreckende Holme aufweist, die verschiebbar zwischen den Hauptrahmen und das Arbeitsfahrzeug einsetzbar sind. Die Holme ergeben eine ausreichende Führung beim Verschieben des Rahmens und benötigen keinen zusätzlichen Raum. Zum Erleichtern des Verschiebens könnten gegebenenfalls Führungsrollen in dem Spalt zwischen dem Arbeitsfahrzeug und der Anschluß- und Kupplungsvorrichtung vorgesehen werden. Bei einer Anschluß- und Kupplungsvorrichtung mit einem oberen Lenker der Geräteanbeuvorrichtung, wobei sich zwischen dem oberen Lenker und den unteren Lenkern ein nach vorne offener Freiraum bildet, führt eine Anordnung, derart, daß der Rahmen mit dem Zusatzrahmen in den Freiraum einsetzbar ist, zu einer enormen Raumersparnis und zu einer vorteilhaften Kombination einer Anschluß- und Kupplungsvorrichtung mit einem Rahmen zur Aufnahme von Geräten oder eines Gewichtes. Eine derartige Integration führt zur Nutzbarmachung des ohnehin vorhandenen Freiraumes und zu einem problemlosen Nebeneinander zweier Aggregate für unterschiedliche Funktionen.

Eine gute Führung des Zusatzrahmens gegenüber dem Rahmen beim Anheben des Zusatzrahmens wird in erfinderischer Weise dadurch erreicht, daß mindestens eine Anlagefläche, die geneigt, und zwar oben weiter vom Arbeitsfahrzeug weg als unten, verläuft, vorgesehen ist, wobei dadurch, daß der Zusatzrahmen derart ausgebildet ist, daß der Schwerpunkt des aufzunehmenden Gerätes oder des aufzunehmenden Gewichtes auf der der Anschluß- und Kupplungsvorrichtung abgelegenen Seite des Anlenkpunktes der Hubstrebe liegt, stets eine feste Anlage des Zusatzrahmens in oder an dem Rahmen und der Anlagefläche gegeben ist.

Zur formschlüssigen Verbindung des Rahmens mit dem Zusatzrahmen ist nach einem weiteren erfinderischen Gedanken vorgesehen, daß der Rahmen auf jeder Seite eine Profilschiene aufweist und das Führungsgegenstück als eine das Gewicht durchdringende und seitlich über dieses überstehende Gleitstange ausgebildet ist. Eine vereinfachte Aufnahme des Zusatzrahmens aus einer Lagerstellung auf dem Boden wird erreicht durch keilförmige Aufnahmerampen, die sich über die Breite der Profilschienen und bis zum Anfang der in diesen gebildeten Führungsbahnen erstrecken. Die Sicherheit gegen ungewolltes Herausgleiten des Zusatzrahmens aus der Führungsbahn wird dadurch gewährleistet, daß am Anfang der Führungsbahnen jeweils eine untere federbelastete Sperre vorgesehen ist, über die die Führungsbahnen in einer Richtung verschließbar sind, wobei die unteren Sperren einen Sperrbolzen mit einem keilförmigen Fußteil aufweisen, der mittels eines Hebels in eine Verriegelungsstellung und eine Entriegelungsstellung bringbar ist und der in der Verriegelungsstellung gegen die Aufnahmerampen unter der Wirkung einer Feder zur Anlage bringbar ist.

Ferner ist nach einem weiteren Erfindungsmerkmal vorgesehen, daß die Sperrmittel obere Sperren mit einer schwenkbaren Profilplatte enthalten und das Gewicht hakenförmige Ausnehmungen aufweist, wobei die Profilplatten ebenfalls eine Verriegelungs- und eine Entriegelungsstellung einnehmen können und in der Verriegelungsstellung mit der zugehörigen hakenförmigen Ausnehmung in Formschluß bringbar sind. Die Ausgestaltung der oberen Sperren könnte im einzelnen danach so aussehen, daß die Profilplatte unter der Kraft eines federbelasteten Hebels in die Ent- und die Verriegelungsstellung bringbar ist und/oder die oberen Sperren im Endbereich der Führungsbahnen angeordnet sind.

In weiterer Ausgestaltung der Erfindung ist vorgesehen, daß die Sperrmittel einen Pendelriegel mit einem zweifach gekröpften Bügel enthalten, der in eine in dem Gewicht vorgesehene Vertiefung wahlweise einsetzbar und über Klemmmittel an dem Rahmen festlegbar ist, wodurch der Zusatzrahmen in seiner angehobenen Stellung gegenüber dem Rahmen pendelfrei festlegbar ist. Insbesondere bei der Aufnahme einer schweren Masse, beispielsweise eines Gußgewichts oder eines Tanks mit Flüssigkeit, die in diesem hin- und herschwappen kann, führt dieses Merkmal zu einer sicheren Verbindung des Zusatzrahmens mit dem Rahmen.

In der Zeichnung ist ein nachfolgend näher beschriebenes Ausführungsbeispiel der Erfindung dargestellt. Es zeigt:

Fig. 1 einen Vorderteil eines Ackerschleppers mit einer Geräteanbauvorrichtung in Seitenansicht,

Fig. 2 einen Ballastgewichteträger in einem vertikalen Längsschnitt,

Fig. 3 eine untere Sperre des Ballastgewichteträgers im Vertikalschnitt gemäß Fig. 5 in der durch die Pfeile 3 angegebenen Blickrichtung,

Fig. 4 einen Pendelriegel ebenfalls im Vertikalschnitt gemäß Fig. 5 in der durch die Pfeile 4 angegebenen Blickrichtung,

Fig. 5 den Ballastgewichteträger im Schnitt in Blickrichtung der Pfeile 5 entlang der Schnittlinie in Fig. 2,

Fig. 6 einen aus mehreren Ballastgewichten gebildeten Ballastgewichteblock in räumlicher Darstellung, und

Fig. 7 den Ballastgewichteträger mit aufgenommenem Ballastgewichteblock und in einer dem Vorderteil des Ackerschleppers abgelegenen Stellung.

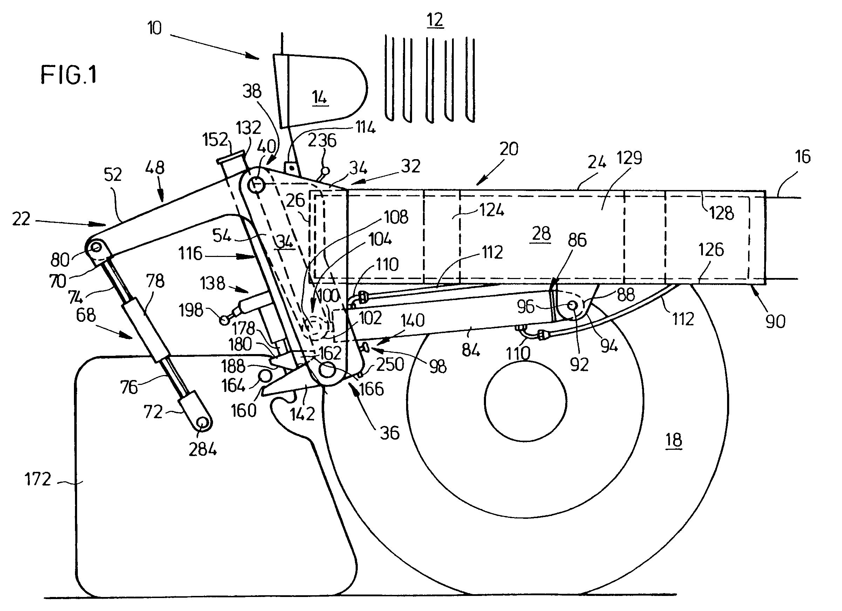

Von einem in Fig. 1 gezeigten Vorderteil 10 eines Ackerschleppers sind eine Abdeckhaube 12 für einen in der Zeichnung nicht ersichtlichen Antriebsmotor und ein Frontscheinwerfer 14 zu erkennen. Diese Abdeckhaube 12 ist auf einen Fahrzeugrahmen 16 aufgesetzt, der entweder als Halbrahmen oder Vollrahmen ausgebildet ist, um Anbaugeräte oder ähnliches an dem Ackerschlepper frontseitig anbringen zu können. Es ist ferner ein rechtes Vorderrad 18 zu erkennen, das in Blickrichtung auf die Zeichnung, allerdings hinter dem Vorderteil 10, gelegen ist, während das der Betrachterebene zugelegene Vorderrad und die gesamte Vorderachse in der Zeichnung weggelassen wurden, um einen besseren Überblick zu schaffen.

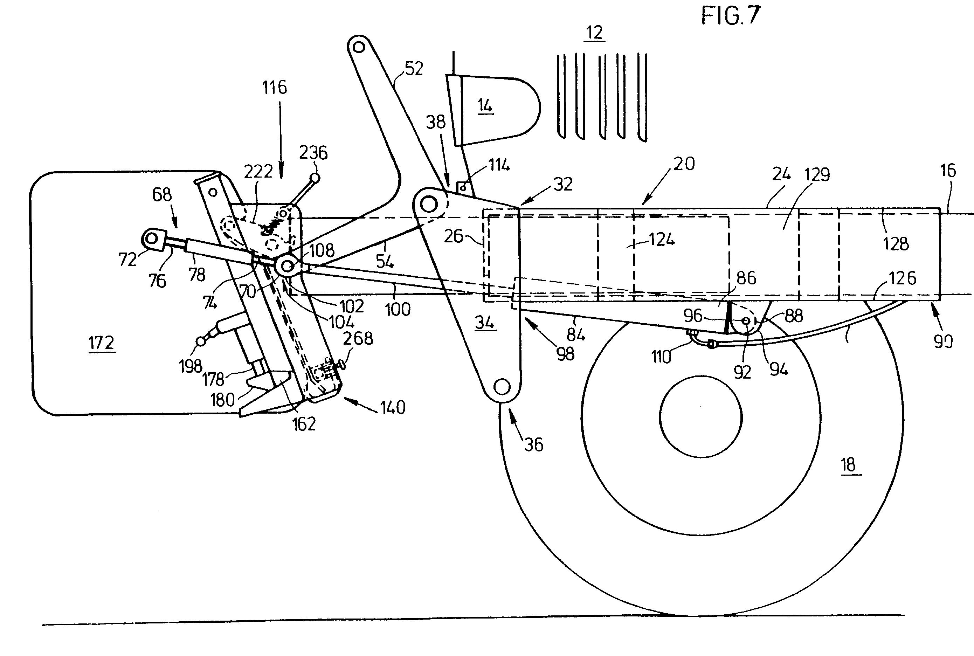

Zur Vereinfachung der Beschreibung werden im folgenden Begriffe wie vorne, hinten, rückwärtig, links, rechts, oben und unten verwendet, wobei gelten soll, daß diese sich auf die Vorwärtsfahrtrichtung des Ackerschleppers beziehen sollen. Dementsprechend zeigen die Figuren 1 und 7 den Vorderteil 10 des Ackerschleppers von seiner linken Seite.

In einem vorderen Endbereich 20 des Fahrzeugrahmens 16 ist eine Anschluß- und Kupplungsvorrichtung oder Geräteanbauvorrichtung 22 angebracht, die symmetrisch zu der vertikalen Längsmittelebene des Ackerschleppers ausgebildet ist, weshalb sich die folgende Beschreibung nur auf eine Seite bezieht, während jedoch alles Beschriebene zweifach vorhanden ist, sofern nichts Gegenteiliges hierzu ausgeführt wird. Diese Geräteanbauvorrichtung 22 ist auf einen U-förmigen Hauptrahmen 24 mit einem Quer- und zwei Seitenteilen 26 und 28 aufmontiert, der aus U-Profilstahl zusammengeschweißt ist, wobei die Profilgröße der Seitenteile 28 so gewählt ist, daß sie den Fahrzeugrahmen 16 gerade noch in ihrem von einem unteren und einem oberen Schwenkel 126, 128 und einem Steg 129 umfaßten Raum aufnehmen können, und der Hauptrahmen 24 von vorne über den Fahrzeugrahmen 16 des Ackerschleppers geschoben wird, um so eine formschlüssige Verbindung mit diesem eingehen zu können. Sobald der Hauptrahmen 24 seine endgültige Lage erreicht hat, wird er über handelsübliche Sicherungsstecker oder Schrauben, die der Einfachheit halber in der Zeichnung weggelassen worden sind, auf herkömmliche Weise gegen Verrutschen gesichert. Im Bereich seines vorderen Endes 32 ist zu jeder Seite eine dreiecksähnliche vertikal ausgerichtete Konsole 34 mit einem unteren und einem oberen vorderen Eckbereich 36 und 38 angeschweißt oder angeschraubt. An dem oberen vorderen Eckbereich 38 ist ein fest angeordneter, sich quer zur Längsmittenebene des Ackerschleppers erstreckender oberer Zapfen 40. vorgesehen. Zur Aufnahme des Zapfens 40, ist eine in der Zeichnung nicht sichtbare Bohrung in dem zugehörigen Eckbereich 38 eingebracht, in die der Zapfen 40, eingesetzt und mit der Konsole 34 verschweißt wird, um so einen festen Halt für einen als Winkelhebel ausgebildeten Hub arm 48 auf dem oberen Zapfen 40 zu ergeben. Der Hubarm 48 besteht aus einem oberen und einem unteren Schenkel 52 und 54, die etwa gleich lang und aus einem entsprechend stark dimensionierten Flachstahl oder einem Hohlprofil gebildet sind. In den Hubarm 48 sind drei in der Zeichnung nicht erkennbare Bohrungen eingearbeitet, und zwar eine mittlere im Schnittpunkt der beiden Schenkel 52, 54, eine vordere im Endbereich des oberen und eine rückwärtige im Endbereich des unteren Schenkels 52 und 54. Die mittlere Bohrung dient der schwenkbaren Aufnahme des oberen Zapfens 40. Der Hubarm 48 kann eine Schwenkbewegung in einer Vertikalebene durchführen und ist gegen Herausfallen von dem oberen Zapfen 40 mit einem nicht dargestellten Sicherungsstift, der den oberen Zapfen 40 durchdringt, gesichert.

Von der vorderen Bohrung des oberen Schenkels 52 erstreckt sich eine Hubstrebe oder Hubspindel 68, fort die aus zwei mit jeweils einem Gabelende 70, 72 versehenen Gewindestangen 74, 76, und zwar mit gegenläufigem Gewinde, besteht, die in einer Gewindehülse 78 drehbar aufgenommen werden. Das eine Gabelende 70 ist über einen Bolzen 80, der sich durch die vordere Bohrung in dem oberen Schenkel 52 und das Gabelende 70 erstreckt, mit dem Hubarm 48 verbunden, während auf nicht gesagte Weise das andere Gabelende 72 über einen weiteren Bolzen, der sich durch eine Bohrung in einem unteren Lenker und durch das andere Gabelende 72 erstreckt, auch an dem unteren Lenker angreifen innte. Eine vertikale Schwenkbewegung des Hubarms 48 bedingt somit grundsätzlich auch eine vertikale Schwenkbewegung des ertl angebauten unteren Lenkers.

Die vertikale Schwenkbewegung wird über eine doppeltwirkende Betätigungsvorrichtung in Form eines Hydraulikzylinders 84 erzielt, der einenends, und zwar an dem kolbenseitigen Ende 86, mit einer Öse 88 versehen ist, die zwischen zwei an einer Unterseite 90 des Hauptrahmens 24 mit Abstand zueinander angebrachte, jeweils eine Bohrung 92 aufweisende Halter 94 ragt und dort mittels eines Bolzens 96 schwenkbar gehalten wird. Anderenends, also an dem kolbenstangenseitigen Ende 98, ist ein in dem Hydraulikzylinder 84 geführter Hydraulikkolben 100 endseitig ebenfalls mit einer Öse 102 versehen, die einen in den Endbereich 104 des unteren Schenkels 54 eingesetzten Zapfen 108 schwenkbar übergreift. Nahe beider Enden 86, 98 des Hydraulikzylinders 84 ist jeweils ein Anschluß 110 für Hydraulikschläuche 112 vorgesehen, die zu einem nicht gezeichneten Steuerventil führen, das von einer ebenfalls nicht gezeigten Hydraulikpumpe geförderte Druckflüssigkeit dem jeweiligen Ende 86, 98 des Hydraulikzylinders 84 je nach seiner Stellung zuleitet, um den Hydraulikkolben 100 in der einen oder der anderen Richtung zu bewegen und somit den Hubarm 48 in der einen oder anderen Richtung zu verschwenken. So bewirkt ein kolbenseitiges Beaufschlagen des Hydraulikzylinders 84 mit Druckflüssigkeit eine Schwenkbewegung des Hubarms 48 nach oben, d.h. mit Blick auf die Zeichnung im Uhrzeigerdrehsinn. Der untere Schenkel 126 des Seitenteils 28 weist eine Aussparung auf, damit der Hydraulikzylinder 84 ausreichend weit nach oben geschwenkt werden kann.

Zwischen den beiden Konsolen 34 ist auf der Querteil 26 des Hauptrahmens 24 ein Halter 114 für einen nicht dargestellten oberen Lenker angebracht. Diese soweit beschriebene Geräteanbauvorrichtung 22 ist eine Dreipunktgerätekupplung, die zum Anbauen beispielsweise eines Mähwerks, einer Egge, eines Kultivators oder ähnlichem geeignet ist.

Diese Geräteanbauvorrichtung 22 weist mit irgendeinem mit ihr verbundenen Gerät ein Gewicht auf, das in aller Regel ausreicht, den Vorderteil 10 mit den Vorderrädern 18 des Ackerschleppers so fest auf den Boden zu drücken, daß eine ausreichende Gewichtsbelastung des Vorderteils 10 des Ackerschleppers gegeben ist, die einem Aufbäumen des Ackerschleppers bei an seinem Heck angebauten schweren und/oder weit rückwärtig ausladenden Geräten, wie etwa Pflügen, entgegenwirkt, und, falls die Vorderräder 18 angetrieben sind, diese mit einem Minimum an Schlupf den Ackerschlepper bewegen.

Bei einem Großteil der Arbeiten des Ackerschleppers, insbesondere bei Transportarbeiten, ist jedoch kein Gerät an dem Vorderteil 10 des Ackerschleppers angebaut, so daß unter Umständen eine ausreichende Gewichtsbelastung des Vorderteils 10 nicht mehr gewährleistet ist.

Die vorbeschriebene Geräteanbauvorrichtung 22 reicht aus, um ein einzelnes Gerät aufzunehmen. Sie ist allerdings nicht geeignet, um mehrere Geräte als Kombination aufzunehmen.

Wie diese Geräteanbauvorrichtung 22 in ihrer Verwendbarkeit gesteigert werden kann, ist in den Figuren 1 bis 7 anhand eines aufzunehmenden Gewichtes gezeigt, wobei anstelle dieses Gewichtes auch ein Gerät oder ein Behälter zusätzlich aufgenommen werden könnte.

So ist ein Rahmen, genauer ein Ballastgewichteträger 116, vorgesehen, der analog zu dem Hauptrahmen 24 der Geräteanbauvorrichtung 22 mit einem U-förmig ausgebildeten Grundrahmen 118, bestehend aus zwei Holmen oder Seitenwangen 120 und einer Traverse 122, versehen ist, wobei die Breite des Grundrahmens 118 so bemessen ist, daß dieser zwischen die Seitenteile 28 des Hauptrahmens 24 und den Fahrzeugrahmen 16 eingeschoben werden kann. Die Seitenteile 28 sind jeweils mit zwei Laschen 124 versehen, die sich von dem unteren Schenkel 126 des U-förmigen Hauptrahmens 24 bis zu dem oberen Schenkel 126 des U-förmigen Hauptrahmens 24 bis zu dem oberen Schenkel 128 erstrecken und somit das Profil in diesem Bereich schließen. Die Laschen 124 erstrecken sich ungefähr bei der halben Schenkellänge von dem unteren zu dem oberen Schenkel 126 und 128 und liegen bei aufgeschobenem Hauptrahmen 24 an dem Fahrzeugrahmen 16 an. Der jeweils von einer Lasche 124, einem unteren Schenkel 126, einem oberen Schenkel 128 und einem Steg 129 umfangene Raum vermag gerade eine Seitenwange 120 in sich aufzunehmen und sie beim Einschieben des Ballastgewichteträgers 116 in die Geräteanbauvorrichtung 22 zu führen. Der Querteil 26 des Hauptrahmens 24 ist mit zwei der Zeichnung nicht entnehmbaren Aussparungen versehen, durch die die Seitenwangen 120 des Grundrahmens 118 zwischen den Hauptrahmen 24 und den Fahrzeugrahmen 16 eingeschoben werden können. Der Ballastgewichteträger 116 ist dann vollkommen in den Hauptrahmen 24 eingeschoben, wenn die Traverse 122 mit ihrer Rückseite an der Vorderseite des Querteils 26 zur Anlage kommt.

Die Traverse 122 ist starr mit einer Gleitvorrichtung 130 verbunden, die im wesentlichen aus zwei Profil- bzw. Gleitschienen 132, zwei Anlageflächen 134, zwei oberen und zwei unteren Sperren 136 und 138, einem Pendelriegel 140, zwei Aufnahmerampen 142 und zwei Platten 144 besteht, die mit Ausnahme des Pendelriegels 140, der sich in der Mitte der Gleitvorrichtung 130 befindet, symmetrisch zu der vertikalen Längsmittenebene des Ackerschleppers angeordnet sind. Die Gleitschienen 132 sind aus einem U-Profilstahl mit einem vorderen, einem rückwärtigen und einem äußeren Schenkel 146, 148, 150 hergestellt und an dem oberen Ende durch eine Flachstahlplatte 152 verschlossen. Sie sind wie die gesamte Gleitvorrichtung 130 oben leicht nach vorne geneigt und nehmen mit Bezug auf die Aufstandsebene des Ackerschleppers einen Winkel von ca. 60° ein. Ihre offene Seite ist der vertikalen Längsmittenebene des Ackerschleppers zugewandt. An dem rückwärtigen Schenkel 148 der Gleitschienen 132 ist an deren innerer Kante jeweils eine sich rückwärtig erstreckende, über nahezu die gesamte Länge der Gleitschienen 132 führende Platte 144 befestigt, die an der Außenfläche des Grundrahmens 118 ortsfest angreift. Diese Platten 144 stehen nach unten über die Gleitschienen 132 hervor und sind an dem überstehenden Ende mit den Aufnahmerampen 142 verbunden, beispielsweise verschweißt oder verschraubt. An ihrem oberen Ende sind sie jeweils mit einer Bohrung 154 versehen, die für die oberen Sperren 136 vorgesehen ist, wie dies später noch erläutert werden wird. Zwischen den beiden Platten 144 und an deren unteren Ende erstreckt sich ein Träger 158, der auf halber Länge den Pendelriegel 140 aufnimmt und der der Versteifung der gesamten Gleitvorrichtung 130 dient.

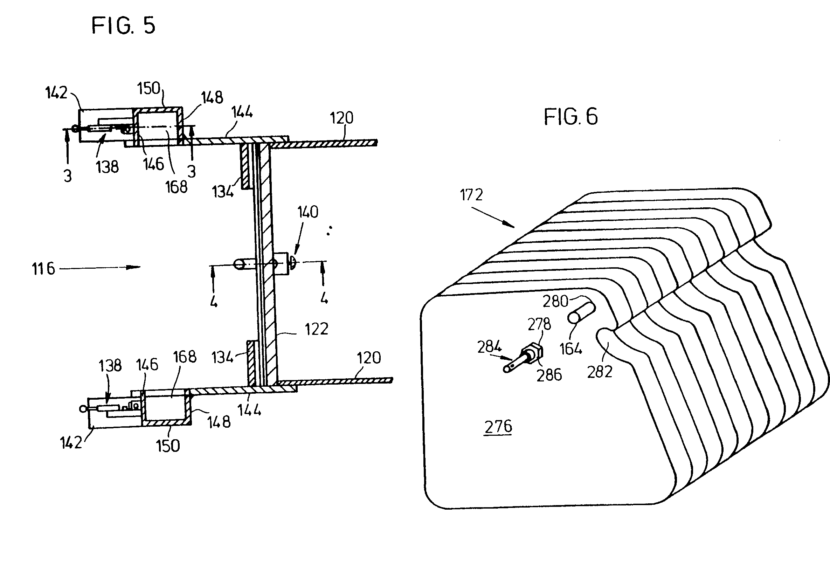

Die Aufnahmerampen 142 sind aus einem Schmiedestahl hergestellt, der relativ abriebsfest ist. Sie nehmen die Form eines in Richtung auf das Heck des Ackerschleppers ansteigenden Keiles ein, und sie sind derart an der Platte 144 befestigt, daß zwischen dem vorderen Schenkel 146 der Gleitschiene 132 und einer oberen Fläche 160 der Aufnahmerampe 142 ein Spalt 162 verbleibt, der zum Einführen einer in Fig. 6 dargestellten Gleitstange 164 als Führungsgegenstück dient. An ihrem rückwärtigen Ende sind sie nach oben gebogen und führen über eine Hohlkehle 166 zu dem rückwärtigen Schenkel 148 der Gleitschiene 132, um eine ununterbrochene Gleitfläche zu bilden, an der die Gleitstange 164 entlang streichen kann und die in eine von den Schenkeln 146, 148, 150 umschlossene Führungsbahn 168 übergeht. Rechtwinklig auf die der vertikalen Längsmittenebene des Ackerschleppers zugewandte Seite der Platten 144 und parallel zu dem rückwärtigen Schenkel 148 der Gleitschiene 132 ist jeweils die Anlagefläche 134 in Form einer etwa 10 cm breiten Flachstahlplatte angeschweißt. Sie erstreckt sich nahezu über die gesamte Länge der Platte 144 und ist an ihrem unteren Ende auf einer Länge von ca. 10 cm schräg rückwärtig abgebogen, um so einen erweiterten Mündungsbereich 170 zu schaffen, der verhindert, daß beim Aufnehmen eines Gewichtes mit einem Zusatzrahmen wie in Fig. 6 eines Ballastgewichteblockes 172 dieser an der Unterseite der Anlagefläche 134 anstößt und deshalb nicht mit seiner Gleitstange 164 in die Führungsbahnen 168 eintreten kann.

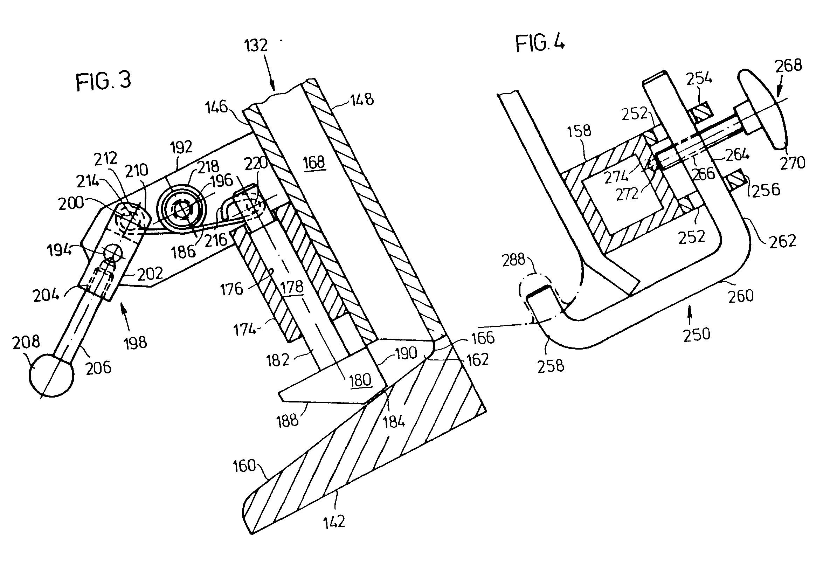

An dem vorderen Schenkel 146 jeder Gleitschiene 132 ist jeweils die untere Sperre 138 angebracht, deren genauer Aufbau anhand von Fig. 3 erläutert wird. In einem Gehäuse 174, das an der Vorderseite des vorderen Schenkels 146 der jeweiligen Gleitschiene 132 angeschweißt ist und das eine parallel zu der Gleitschiene 132 ausgerichtete Längsbohrung 176 aufweist, ist ein Sperrbolzen 178 verschieblich gelagert. Dieser weist an seinem unteren und der Aufnahmerampe 142 zugelegenen Ende einen fünfeckigen Fußteil 180 auf, der auf den unteren Endbereich eines in der Längsbohrung 176 befindlichen Schaftteils 182 aufgeschraubt ist und dessen Seiten derart gewählt sind, daß eine Seite 184 parallel zu der oberen Fläche 160 der Aufnahmerampe 142 verläuft und gegen diese unter der Wirkung einer Feder oder eines Federelementes 186 zur Anlage bringbar ist, daß eine zweite Seite 188 mit der oberen Fläche 160 der Aufnahmerampe eine Schere bildet und daß eine dritte rückwärtige Seite 190 sich rechtwinklig zu der oberen Fläche 160 der Aufnahmerampe 142 erstreckt. Über dem Gehäuse 174 ist ein sich in Fahrtrichtung erstreckender Hebelhalter 192 aus Flachstahl angebracht, von dem zwei Lagerbolzen 194 und 196 rechtwinklig wegstehen, um zum einen einen Hebel, genauer Sperrhebel 198, und zum anderen das Federelement 186 drehbar aufzunehmen. Der Sperrhebel 198 weist ein mit einer Bohrung 200 zur Aufnahme des einen Lagerbolzens 194 versehenes Gabelstück 202 auf, das um den Lagerbolzen 194 schwenkbar ist und einenends eine Gewindebohrung 204 besitzt, in die eine Gewindestange 206 mit einem Kugelkopf 208 einschraubbar ist, und das anderenends zwischen zwei sich aus der Gabelform ergebenden Schenkeln 210 ein Ende des Federelements 186 mittels eines sich durch die Schenkel 210 und durch eine an dem Ende des Federelements 186 angeformte Öse 212 erstreckenden Stiftes 214 gelenkig aufnimmt. Das Federelement 186 weist außer der genannten Öse 212 eine sich an dem gegenüberliegenden Ende befindliche weitere Öse 216 und zwischen beiden Ösen 212, 216 eine Schlaufe 218 auf. Die Schlaufe 218 umfaßt den anderen Lagerbolzen 196 und bildet auf diesem ein Lager des Federelements 186. Die weitere Öse 216 ist über einen den Schaftteil 182 in seinem oberen Endbereich durchdringenden Stift 220 schwenkbar an dem Sperrbolzen 178 angelenkt. Es besteht somit eine Zwangsführung zwischen dem Sperrhebel 198 und dem Sperrbolzen 178 über das Federelement 186. So bewirkt ein Verschwenken des Sperrhebels 198 im Uhrzeigerdrehsinn mit Blick auf Fig. 3 grundsätzlich eine im Gegenuhrzeigerdrehsinn gerichtete Drehbewegung des Federelements 186 um den zugehörigen Lagerbolzen 196 und eine nach oben gerichtete Bewegung des Sperrbolzens 178, durch die der Fußteil 180 von dem Spalt 162 wegbewegt wird, der somit den Eintritt in die Führungsbahn 168 freigibt. Wird der Sperrhebel 198 im Gegenuhrzeigerdrehsinn verschwenkt, dann bewegt sich der Fußteil 180 auf die Aufnahmerampe 142 zu, bis er dort zur Anlage kommt und den Spalt 162 verschließt. In dieser Stellung ist ein Anheben des Sperrbolzens 178 nur entgegen der Wirkung des Federelements 186 möglich, wie es stattfindet, wenn die Gleitstange 164 auf eine später noch zu beschreibende Weise an der oberen Fläche 160 der Aufnahmerampe 142 entlang gleitet und in die Führungsbahn 168 eintritt. Der Sperrhebel 198 ist zwischen zwei Endstellungen schwenkbar, wobei die eine als Verriegelungsstellung und die andere als Entriegelungsstellung bezeichnet wird. In der Verriegelungsstellung befindet sich der Sperrhebel 198 in der unteren Endstellung, und der Fußteil 180 sitzt auf der Aufnahmerampe 142 auf, während sich in der Entriegelungsstellung der Sperrhebel 198 in seiner oberen Endstellung befindet, in der der Fußteil 180 über das Federelement 186 von der Aufnahmerampe 142 so weit abgehoben wird, daß der Spalt 162 vollkommen geöffnet ist. Der Sperrhebel 198 kann nicht selbsttätig aus der einen in die andere Endstellung gelangen, da bei seinem Verschwenken um den die Öse 212 aufnehmende Lagerbolzen 194 der Stift 214 eine andere Kreisbahn beschreibt, als die Öse 212 beim Verschwenken des Federelements 186 um den von der Schlaufe 218 umfaßten Lagerbolzen 196 ohne zusätzliche Krafteinwirkung beschreiben würde. Der Sperrhebel 198 kann entgegen der sich aus der Überlagerung der beiden Kreisbahnen ergebenden Selbsthemmung nur durch ein geringfügiges Verbiegen des Federelementes 186 von der einen zu der anderen Endstellung geschwenkt werden, was jedoch nur unter äußerer Krafteinwirkung, beispielsweise durch eine Bedienungsperson, erfolgen kann.

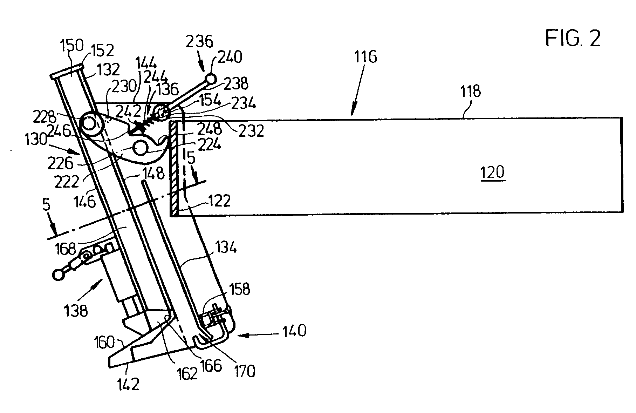

Die oberen in Fig. 2 gezeigten Sperren 136 sind jeweils an den Platten 144 angebracht, und zwar an deren oberen Ende und auf der der vertikalen Längsmittelebene des Ackerschleppers zugewandten Seite. Sie bestehen jeweils aus einer schwenkbaren Profilplatte 222, die nahe ihres einen Endbereiches eine Bohrung 224 besitzt, durch die sich ein an der Platte 144 angeschweißter Lagerzapfen 226 erstreckt. Der andere Endbereich der Profilplatte 222 ist abgerundet und mit einem Rundstahlansatz 228 verbunden, dessen Außendurchmesser dem Durchmesser der Rundung des anderen Endbereiches entspricht. Es wäre auch möglich, anstatt des Rundstahlansatzes 228 an jeder Profilplatte 222 eine sich zwischen beiden Profilplatten 222 erstreckende und mit diesen verbundene Stange vorzusehen. Die Profilplatte 222 ist mit einem Anschlag 230 versehen, der sich senkrecht von ihr und von der vertikalen Längsmittelebene des Ackerschleppers weg erstreckt, so daß er gegen den rückwärtigen Schenkel 148 der Gleitschiene 132 zur Anlage bringbar ist und somit die Profilplatte 222 in einer Stellung hält, in der sie ungefähr bis zu dem vorderen Schenkel 146 der Gleitschiene 132 reicht. Radial zu dem Lagerzapfen 226 und oberhalb und rückwärtig versetzt ist in der Platte 144 ebenfalls die Bohrung 154 eingebracht, durch die ein Stufenbolzen 232 ragt, der, wie dies im Detail jedoch nicht gezeigt ist, mit einem Bund auf der einen Seite der Platte 144 zur Anlage kommt und mit einem durch die Bohrung 154 führenden Gewindeteil und einer auf der anderen Seite der Platte 144 zur Anlage kommenden Mutter sicherbar ist. Zwischen der Mutter und dem Bund erstreckt sich zusätzlich eine auf den Gewindeteil aufgeschobene Distanzhülse, die für einen Abstand zwischen dem Bund und der Mutter sorgt, der geringfügig größer ist als die Stärke der Platte 144, so daß der Stufenbolzen 232 zwar beiderseits der Platte 144 zur Anlage kommt, auf diese aber nur geringfügige Reibkräfte ausübt, die ein Drehen des Stufenbolzens 232 in der Bohrung 154 noch zulassen. In dem Stufenbolzen 232 ist eine Bohrung 234 angeordnet, in der als Hebel ein Sicherungshebel 236 verschiebbar geführt ist. Dieser Sicherungshebel 236 besteht im wesentlichen aus einem Stiel 238, dessen eines Ende mit einem Kugelkopf 240 versehen ist und nahe dessen anderen Ende ein Spannstift 242, der sich quer durch den Stiel 238 erstreckt, vorhanden ist. Eine als Schraubenfeder 244 ausgeführte Druckfeder ist auf den Stiel 238 aufgeschoben, die sich im montierten Zustand zwischen dem Spannstift 242 und dem Stufenbolzen 232 erstreckt und somit dafür Sorge trägt, daß der Sicherungshebel 236 stets von dem Stufenbolzen 232 weg auf die Profilplatte 222 hingerichtet bewegt wird. Zu jeder Seite einer die Mittelpunkte des Lagerzapfens 226 und des Stufenbolzens 232 verbindenden Radialen ist nahe der Bohrung 224 eine Kerbe 246, 248 in die Profilplatte auf der dem Sicherungshebel 236 zugelegenen Seite eingebracht, in die der Stiel 238 mit seinem dem Kugelkopf 240 abgelegenen Ende wahlweise einsetz- und mittels der Schraubenfeder 244 arretierbar ist. Durch die seitliche Anordnung der Kerben 246, 248 gegenüber dem Mittelpunkt der Bohrung und somit dem Schwenkpunkt der Profilplatte 222 auf dem Lagerzapfen 226 übt der Sicherungshebel 236 mit der Schraubenfeder 244 ein Moment auf die Profilplatte 222 aus, das dazu führt, daß diese entweder im Uhrzeigerdrehsinn oder im Gegenuhrzeigerdrehsinn selbsttätig verschwenkt. Die beiden Kerben 246, 248 werden ihrem Zweck nach als Verriegelungs- und Entriegelungskerbe 246 und 248 bezeichnet, wobei die zwischen der Bohrung 224 und dem abgerundeten Ende der Profilplatte 222 gelegene Kerbe die Verriegelungskerbe 246 und die auf der anderen Seite der Bohrung 224 gelegene Kerbe die Entriegelungskerbe 248 ist. Um den Sicherungshebel 236 von der Verriegelungs- in die Entriegelungskerbe 246, 248 zu bringen, ist dieser entgegen der Wirkung der Schraubenfeder 244 an seinem Kugelkopf 240 von der Profilplatte 222 wegzuziehen, gemeinsam mit dem Stufenbolzen 232 in Richtung auf die Entriegelungskerbe 248 zu verschwenken und auf diese hingleiten zu lassen.

Ist der Sicherungshebel 236 in die Verriegelungskerbe 246 eingesetzt, dann wird die Profilplatte 222 auf den vorderen Schenkel 146 der Gleitschiene 132 zubewegt, bis der Anschlag 230 an dieser anliegt; befindet er sich in der Entriegelungskerbe 248, dann wird sie aus dem Bereich der Führungsbahn 168 herausgeschwenkt, und zwar im Uhrzeigerdrehsinn mit Blick auf Fig. 2. Die Funktion und der Sinn dieser oberen Sperren 136 wird ebenfalls später noch genauer erläutert.

Der Pendelriegel 140 besteht, wie aus Fig. 4 zu ersehen ist, aus einem in einer Ebene zweifach gegensinnig um 90° gekröpften Bügel 250, der in zwei an dem Träger 158 angeschweißten, mit zueinander fluchtenden Langlöchern 252 versehenen oberen und unteren Laschen 254 und 256 eingesetzt und darin verschiebbar und schwenkbar ist. Aus der Kröpfung des Bügels 250 ergeben sich drei Abschnitte, und zwar ein erster 258 im wesentlichen in Richtung der Gleitschienen 132 verlaufender, kurzer, ein zweiter 260 zu diesem rechtwinklig verlaufender und ein dritter parallel zu dem ersten verlaufender, langer und sich durch die Langlöcher 252 erstreckender Abschnitt 262. Auf einem Teilstück 264 des langen Abschnitts 262, und zwar zwischen der oberen und der unteren Lasche 254 und 256, ist eine parallel zu dem zweiten Abschnitt 260 ausgerichtete Gewindedurchgangsbohrung 266 zur Aufnahme einer Arretierschraube 268 vorgesehen, die einenends mit einem Handgriff 270 und anderenends mit einem nicht mit Gewinde versehenen Ansatz 272 ausgestattet ist. Der Ansatz 272 ist in eine entsprechend ausgebildete Aussparung 274 in dem Träger einsetzbar, und zwar durch Drehen der Arretierschraube 268 zu dem Träger 158 hin. Hat der Ansatz 272 die Aussparung 274 erreicht und wird die Arretierschraube 268 weitergedreht, dann wird der Bügel 250 in den Langlöchern 252 von dem Träger 158 wegbewegt und kommt schließlich an dem dem Träger 158 abgelegenen Ende der Langlöcher 252 zur Anlage, wird dort reibschlüssig gehalten und ist gegen jede weitere Bewegung gesichert. In dieser Stellung weist der zweite Abschnitt 260 in Richtung der Längsmittenebene des Ackerschleppers. Die Länge des dritten Abschnittes 262 ist so bemessen, daß dieser in der zuletzt genannten Stellung, die die Verriegelungsstellung des Pendelriegels 140 darstellt, mindestens um die Länge des ersten Abschnitts 258 über die obere Lasche 254 hinausragt.

Aus Fig. 6 geht der Aufbau des aus mehreren Ballastgewichten 276 gebildeten Ballastgewichteblockes 172 hervor. Dieser besteht in diesem Ausführungsbeispiel aus zehn in aller Regel identisch ausgeformten Ballastgewichten 276, von denen jedes ca. 50 kg wiegt. Diese Ballastgewichte 276 haben im wesentlichen eine Trapezform und weisen eine erste und eine zweite Ausnehmung 278 und 280 sowie eine hakenförmige Ausnehmung in Form einer Hakenöse 282 auf. Durch die erste Ausnehmung 278 erstreckt sich eine Stange 284, die gemeinsam mit der durch die zweiten Ausnehmungen 280 geschobenen Gleitstange 164 ein Verrutschen der Ballastgewichte 276 gegeneinander verhindert und als Zusatzrahmen für den Ballastgewichteblock dient. Die sich durch die erste Ausnehmung 278 erstreckende Stange 284 ist auf ihrem aus dem Ballastgewichteblock 172 herausragenden Schaft hierzu teilweise mit Gewinde versehen, auf das jeweils als Klemmittel eine Sicherungsmutter 286 aufgeschraubt wird. Die beiden Sicherungsmuttern 286 werden so fest angezogen, daß die Ballastgewichte 276 klapperfest gegeneinander zur Anlage kommen, und anschließend gegen Lösen gesichert, wie dies auf nicht gezeigte Art etwa mit einem Klappsplint oder einem Federstecker erfolgen kann. Es ist jedoch auch denkbar, die eine Sicherungsmutter 286 und das Gewinde an dem einen Ende wegzulassen und dafür einen Bund anzudrehen, der gegen das äußere Ballastgewicht 276 zur Anlage gebracht wird. Die durch die ersten Ausnehmungen 278 gesteckte Stange 284 ist so lang, daß sie um einen Betrag über die angezogenen Sicherungsmuttern 286 übersteht, der ausreicht, um die Hubspindeln 68 noch mit ihren anderen Gabelenden 72 jeweils auf diese aufzusetzen. In dem Aufsatzbereich der anderen Gabelenden 72 ist die Stange 284 gegenüber dem Abschnitt mit dem Gewinde etwas verjüngt und ohne Gewinde ausgebildet, so daß das Gewinde erst hinter diesem Abschnitt beginnt und somit nicht beim Aufstecken des anderen Gabelendes 72 zerstört wird. Die Gleitstange 164 ist lediglich in die zweiten Ausnehmungen 280 eingeschoben und wirkt sich nicht auf das Verspannen der Ballastgewichte 276 untereinander aus. Sie steht jedoch ebenfalls an den Enden über den Ballastgewichtblock 172 hervor und dient, wie dies noch erläutert wird, zu dessen Führung in den Führungsbahnen 168. Sie wird allenfalls gegen ein seitliches Herausrutschen aus den zweiten Ausnehmungen 280 mittels eines nicht gezeichneten Sicherungsringes gehalten. Die Gleitstange 164 und die Stange 284 bilden einen Zusatzrahmen für die Ballastgewichte 276. Im Gegensatz zu der hier integrierten Form des Zusatzrahmens in die Ballastgewichte ist es auch möglich, einen Zusatzrahmen ähnlich einer Glocke auszubilden, die die Ballastgewichte 276 übergreift. Ob der Zusatzrahmen integriert oder losgelöst ausgebildet wird, richtet sich nach dessen Verwendungszweck. Soll anstatt der Ballastgewichte 276 wahlweise etwa ein Behälter mit Flüssigdünger oder ein Zusatzaggregat aufgenommen werden, dann erweist sich ein Zusatzrahmen, der wahlweise mit den vorgenannten Komponenten verbunden werden kann, als vorteilhaft. Bei der Ausbildung des Zusatzrahmens ist lediglich darauf zu achten, daß die Anlenkpunkte, die mit der Geräteanbauvorrichtung und dem Ballastgewichteträger 116 in Verbindung gebracht werden, stets gleich angeordnet sind.

Der innere Endbereich der Hakenöse 282 ist dem Außendurchmesser des an der Profilplatte 222 angesetzten Rundstahlansatzes 228 angepaßt, so daß die Profilplatte 222 einenends in diese Hakenöse 282 einsetzbar ist. In dem in der Mitte des Ballastgewichtblockes 172 gelegenen Ballastgewicht 276 ist, wie dies in Fig. 4 angedeutet ist, an der Unterseite eine parallel zu den Gleitschienen 132 ausgerichtete Vertiefung 288 eingebracht, die geeignet ist, den ersten Abschnitt 258 des Bügels 250 in sich aufzunehmen. Die mittleren beiden Ballastgewichte 276 können auch vollends entfallen und im Durchtrittsbereich der Stange 284 und der Gleitstange 164 durch Büchsen ersetzt werden, so daß der obere Lenker selbst bei aufgenommenen Ballastgewichten 276 eine ungestörte Vertikalbewegung ausführen kann. In diesem Fall könnte entweder vollkommen auf die Benutzung des Pendelriegels 140 verzichtet oder dieser auf dem Träger 158 seitlich verlagert werden, wozu die obere und die untere Lasche 254 und 256 beweglich auszuführen wären. Gleichwohl könnten die mittleren Ballastgewichte 276 mit einer Drückevorrichtung oder einem Zugmaul zum Verbinden mit einem Anhänger oder einem anderen Kraftfahrzeug versehen sein. Die Drückevorrichtung wäre allerdings auch am Halter 114 für den oberen Lenker anzubringen. Der Schwerpunkt des mit dem Zusatzrahmen zu verbindenden Ballastgewichteblockes 172 oder eines Gerätes liegt auf der dem Ballastgewichteträger 116 abgelegenen Seite der Stange 284.

Die Funktion der Geräteanbauvorrichtung 22 und des Ballastgewichteträgers 116 wird im folgenden anhand des zuvor Beschriebenen und in Verbindung mit den Figuren 1 und 7 erläutert.

Fig. 1 stellt den Vorderteil 10 mit der bereits aufgeschobenen Geräteanbauvorrichtung 22 und mit dem in diese eingeschobenen Ballastgewichteträger 116 dar. Der obere Lenker und die unteren Lenker der Geräteanbauvorrichtung 22 sind entfernt, obwohl sie bei der Aufnahme des Ballastgewichteblockes 172 nicht stören würden. Der Hydraulikkolben 100 des Hydraulikzylinders 84 ist vollkommen eingefahren, und der obere Schenkel 52 des Hubarms 48 befindet sich in seiner tiefsten Stellung. Die Sperrhebel 198 der unteren Sperren 138 befinden sich in ihrer Verriegelungsstellung, die Sicherungshebel 236 der oberen Sperren 136 sind in die Verriegelungskerben 246 eingesetzt, und der Bügel 250 des Pendelriegels 140 ist in eine Stellung quer zur Verriegelungsstellung geschwenkt. Der Ballastgewichteträger 116 befindet sich nun in seiner Ausgangsstellung zur Aufnahme des Ballastgewichteblockes 172. Sind die Geräteanbauvorrichtung 22 und der Ballastgewichteträger 116 soweit vorbereitet, dann wird der Ackerschlepper auf den Ballastgewichteblock 172 zugefahren, bis die Gleitstange 164 an den oberen Flächen 160 der Aufnahmerampen 142 zur Anlage kommt. Zum Aufnehmen des Ballastgewichteblockes 172 werden sodann die Hubspindeln 68, deren andere Gabelenden 72, nachdem die unteren Lenker demontiert wurden, frei sind, jeweils mit dem über die Sicherungsmuttern überstehenden Schaftteil der Stange 284 verbunden, d.h. sie werden mit der in den anderen Gabelenden 72 vorgesehenen Bohrung über die Stange 284 geschoben und dort auf übliche Weise gesichert, was der Übersichtlichkeit wegen jedoch nicht im Detail dargestellt ist. Hierzu sind die Hubspindeln 68 gegebenenfalls durch Verdrehen der Gewindehülsen 78 in ihrer Länge auf den Abstand zwischen der Stange und der vorderen Bohrung in dem oberen Schenkel 52 der Hubarme 48 einzustellen. Danach wird der Ackerschlepper langsam weitergefahren, wodurch, bedingt durch die geneigt verlaufenden oberen Flächen 160 der Aufnahmerampen 142, die Gleitstange 164 und somit auch der Ballastgewichteblock 172 an der dem Vorderteil 10 zugelegenen Seite angehoben werden. Das Anheben des Ballastgewichteblockes 172 ist möglich, da dieser aufgrund seines Gewichtes einen Reibwiderstand gegenüber seiner Aufstandsfläche bildet, der verhindert, daß sich der Ballastgewichteblock 172 trotz der auf ihn einwirkenden Schiebekraft von der Stelle bewegt. Während der Gleitbewegung der Gleitstange 164 auf den oberen Flächen 160 der Aufnahmerampen 142 gelangt die Gleitstange 164 an die Fußteile 180 der Sperrbolzen 178 der unteren Sperren 138 und tritt dort in die zwischen den oberen Flächen 160 und den zweiten Seiten 188 der Fußteile 180 gebildeten Scheren ein. Die Sperrbolzen 178 werden dann entgegen der Wirkung der Federelemente 186 angehoben und lassen die Gleitstange 164 in Richtung auf die Führungsbahnen 168 der Gleitschienen 132 passieren. Sobald die Gleitstange 164 sich zwischen den rückwärtigen dritten Seiten 190 der Fußteile 180 und den Führungsbahnen 168 der Gleitschienen 132 befindet, werden die Sperrbolzen 178 wieder von den Federelementen 186 gegen die oberen Flächen 160 der Aufnahmerampen 142 zur Anlage gebracht und sperren die Spalte 162 am Eingang zu den Führungsbahnen 168 der Gleitschienen 132 wieder ab. Da die dritten Seiten 190 der Fußteile 180 mit den oberen Flächen 160 der Aufnahmerampen 142 keine Scheren bilden, sondern senkrecht zu diesen verlaufen, kann die Gleitstange 164, wenn sie durch das Gewicht des Ballastgewichteblockes 172 zurück gegen die Sperrbolzen 178 gedrückt werden sollte, diese nicht anheben und somit auch nicht mehr aus den Führungsbahnen 168 austreten, solange die Sperrhebel 198 nicht in ihre Entriegelungsstellungen gebracht werden, in denen sie über die Federelemente 186 die Sperrbolzen 178 anheben. Schließlich gerät die Gleitstange 164 an den Innenseiten der rückwärtigen Schenkel 148 der Gleitschienen 132 zur Anlage und kann über die im folgenden beschriebene Schiebebewegung auf dem Weg über die Hohlkehlen 166 in die Führungsbahnen 168 der Gleitschienen 132 eintreten. Wenn die Gleitstange 164 an den Hohlkehlen 166 anliegt, wird der Ackerschlepper angehalten und die Hydraulikzylinder 84 kolbenseitig mit Druckflüssigkeit beaufschlagt. Die dadurch hervorgerufene Längsbewegung der Hydraulikkolben 100 wird auf die Hubarme 48 übertragen und bewirkt deren Verschwenken um jeweils den an den Konsolen 34 angebrachten oberen Zapfen 40 im Uhrzeigerdrehsinn mit Blickrichtung auf Fig. 1. Die sich beim Verschwenken nach oben bewegenden oberen Schenkel 52 der Hubarme 48 nehmen über die Hubspindeln 68 den Ballastgewichteblock 172 mit, der mit der Gleitstange 164 sodann in die Führungsbahnen 168 der Gleitschienen 132 nach oben rutscht. Die angeschrägten Mündungsbereiche 170 der Anlageflächen 134 gewährleisten dann, daß der Ballastgewichteblock 172 mit seiner rückwärtigen Seite einwandfrei gegen die Anlageflächen 134 zur Anlage kommt. Das Ausfahren der Hydraulikkolben 100 und somit das Verschwenken der Hubarme 48 wird so lange fortgesetzt, bis die Gleitstange 164 an den Flachstahlplatten 152 am Ende der Führungsbahnen 168 zur Anlage kommt. Hierzu kann gegebenenfalls ein Endkontaktschalter vorgesehen sein, der die Druckmittelzufuhr zu den Hydraulikzylindern 84 unterbricht, wenn die Gleitstange 164 ihre Endlage erreicht hat. Auf dem Weg in diese Endlage gerät der Ballastgewichteblock 172 jedoch noch an die an den Gleitschienen 132 anliegenden Profilplatten 222 und schwenkt diese nach oben weg, d.h. sie werden mit Bezug auf Fig. 2 im Uhrzeigerdrehsinn von den Führungsbahnen 168 weg verschwenkt. Sobalt der Ballastgewichteblock 172 so weit angehoben worden ist, daß die abgerundeten Enden der Profilplatten 222 in die Hakenösen 282 eintreten können, werden die Profilplatten 222 jeweils mit ihren abgerundeten Enden und dem Rundstahlansatz 228 von den Schraubenfedern 244 und den Stielen 238 der Sicherungshebel 236 in die Hakenösen 282 eingeschwenkt und bilden somit ein Gesperre an den Führungsbahnen 168, das ein Absenken des Ballastgewichteblockes 172 verhindert. Hat dieser seine obere Endlage erreicht und sind somit die oberen Sperren 136 in die Hakenösen 282 eingetreten, dann können die Hydraulikkolben 100 wieder entlastet und teilweise eingefahren werden, und zwar so weit, bis der Ballastgewichteblock 172 auf den Profilplatten 222 und den Rundstahlansätzen 228 aufsitzt. In dieser Stellung wird der Bügel 250 des Pendelriegels 140 in Fahrtrichtung geschwenkt und angehoben, so daß der kurze erste Abschnitt 258 in die Vertiefung 288 eingreift. Ist dieser vollkommen in die Vertiefung 288 eingeschoben, dann fluchtet der Ansatz 272 der Arretierschraube 268 mit der Aussparung 274 in dem Träger 158, und die Arretierschraube 268 kann mit dem Handgriff 270 gedreht werden, um den Bügel 250 in den Langlöchern 252 festzuspannen. Beim Anziehen der Arretierschraube 268 und beim Längsbewegen des dritten Abschnittes 262 in den Langlöchern 252 wird der Ballastgewichteblock 172, bedingt durch die formschlüssige Verbindung des kurzen Abschnittes 258 mit dem Ballastgewichteblock 172 über die Vertiefung 288, gegen die Anlageflächen 134 gezogen und kann nicht mehr um die Rundstahlansätze 228 an dem abgerundeten Ende der Profilplatten 222 aufgrund von Fahrbahnunebenheiten, die sich beim Fahren mit dem Ackerschlepper auf holpriger Strecke auf den Ballastgewichteträger 116 auswirken können, in Fahrtrichtung pendeln. Haben also die unteren und die oberen Sperren 138 und 136 und der Pendelriegel 140 ihre Verriegelungsstellungen eingenommen und ist der Ballastgewichteblock 172 auf die Profilplatten 222 bzw. deren Rundstahlansätze 228 abgelassen worden, dann ist der Aufnahmevorgang des Ballastgewichteblockes 172 in eine Transportstellung beendet.

Das somit auf den Vorderteil 10 des Ackerschleppers aufgebrachte zusätzliche Gewicht ist in der Regel für eine ausreichende Ballastierung des Vorderteils 10 ausreichend. In diesem Falle können die unteren Lenker 50 wieder über die Hubspindeln 68 mit den Hubarmen 48 und den Hydraulikzylindern 84 verbunden und als reine Geräteanbauvorrichtung 22 verwendet werden. Der aufgenommene Ballastgewichteblock 172 stört die Bewegung der unteren Lenker 50 und des oberen Lenkers nicht, da er sich in einem von diesen umschlossenen Freiraum befindet.

Ist an dem Heck des Ackerschleppers jedoch ein übermäßig schweres Gerät angebaut oder wird dem angebauten Gerät während des Einsatzes ein zusätzliches Gewicht erteilt, wie dies etwa beim Pflügen auftreten kann, wenn beim Ausheben des Pfluges aus der Furche noch schwere Lehmkrumen an den Scharen haften bleiben oder wenn die Schare aus einem hochverdichteten Boden ausgehoben werden müssen oder wenn eine Sämaschine frisch mit Saatgut aufgefüllt wird, dann ist es möglich, daß der Ackerschlepper mit seinem Vorderteil 10 um seine Hinterachse aufbäumt, was jedoch zu verhindern ist, da dadurch die Lenkfähigkeit durch die Vorderräder 18 verlorengeht und beim Absenken des Vorderteils 10 nach dem Aufbäumen Schäden an dem Ackerschlepper auftreten können. Um ein derartiges Aufbäumen zu vermeiden, ist der Ballastgewichteträger 116 gegenüber der Geräteanbauvorrichtung 22 verschiebbar ausgeführt.

Ausgehend davon, daß der Ballastgewichteblock 172 in der zuvor beschriebenen Weise in seine Transportstellung gebracht worden ist, sind zum Verschieben des Ballastgewichteträgers 116 die beiden Hubspindeln 68 an den oberen Schenkeln 52 zu lösen und nach unten zu klappen, was möglich ist, da, nachdem der Ballastgewichteblock 172 auf die Profilplatten 222 aufgesetzt worden ist, die Hubspindeln 68 spannungslos geworden sind. Anschließend werden die Hydraulikkolben 100 vollkommen eingefahren, so daß die unteren Schenkel 54 der Hubarme 48 ihre rückwärtigste Stellung einnehmen. Danach wird jeweils das eine Gabelende 70 der Hubspindeln 68 in Eingriff mit dem Zapfen 108, der zur Anlenkung des Hydraulikkolbens 100 an dem unteren Schenkel 54 dient, gebracht, während das andere Gabelende 72 noch an der Stange 284 angreift. Auch hierzu sind die Hubspindeln 68 dem Abstand zwischen der Stange 284 und den Zapfen 108 gegebenenfalls durch Drehen der Gewindehülsen 78 in ihrer Länge anzupassen. An dem unteren Schenkel 54 greifen also jeweils das eine Ende der Hubspindel 68 und der Hydraulikkolben 100 gemeinsam an. Sind die Hubspindeln 68 in dieser Weise umgesteckt worden, dann wird das kolbenseitige Ende 86 jedes Hydraulikzylinders 84 mit Druckmittel beaufschlagt, um dem Hydraulikkolben 100 eine Längsbewegung zu erteilen. Diese Längsbewegung wird auf den Ballastgewichteblock 172 über zwei jeweils aus dem Hydraulikkolben 100 und der Hubspindel 68 gebildete Gelenkketten übertragen, die durch die Anlenkung an dem unteren Schenkel 54 des Hubarms 48 vor einem eventuellen Ausknicken bewahrt werden. Innerhalb eines von dem Hub der Hydraulikkolben 100 abhängigen Bereiches kann nun der Ballastgewichteträger 116 längs der Längsmittenachse des Ackerschleppers verschoben werden und maximal seine in Fig. 8 dargestellte vorderste Stellung einnehmen. In dieser Stellung übt der Ballastgewichteblock 172 das größte Moment um die Hinterachse des Ackerschleppers aus und verhindert dort am wirksamsten ein eventuelles Aufbäumen des Ackerschleppers. Ist der Betriebszustand, der ein derart großes Moment erfordert, vorbei, dann kann durch ein Beaufschlagen der Hydraulikkolben 100 kolbenstangenseitig der gesamte Ballastgewichteträger 116 wieder in Richtung auf den Vorderteil 10 des Ackerschleppers zu gezogen werden. Es ist offensichtlich, daß eine derartige Anpassung der Ballastierung des Vorderteils 10 des Ackerschleppers an die wechselnden Betriebsbedingungen sehr schnell und für den Fahrer des Ackerschleppers mühelos erfolgen kann.

Soll der Ackerschlepper wieder zurückgerüstet werden, so ist der Ballastgewichteträger 116, sollte er sich in einer dem Vorderteil 10 abgelegenen Stellung befinden, in seine rückwärtigste Stellung zu bewegen. Anschließend sind die Sicherungshebel 236 der oberen Sperren 136 in die Entriegelungskerben 248 einzusetzen, so daß, sobald der Ballastgewichteblock 172 angehoben wird, die Profilplatten 222 im Uhrzeigerdrehsinn unter der Wirkung der Schraubenfedern 244 verschwenkt werden. Ferner sind die Sperrhebel 198 um ihre Lagerbolzen 194 im Uhrzeigerdrehsinn in ihre Entriegelungsstellungen zu verschwenken, wodurch die Federelemente 186 eine Schwenkbewegung erfahren und, bedingt durch ihre formschlüssige Verbindung mit den Sperrbolzen 178, diese anheben und die Fußteile 180 aus den zu den Führungsbahnen 168 führenden Spalten 162 bewegen, so daß, sobald der Ballastgewichteblock 172 abgesenkt wird, die Gleitstange 164 aus den Führungsbahnen 168 wieder austreten kann. Außerdem ist die Arretierschraube 268 des Pendelriegels 140 wieder zu lösen und so weit herauszudrehen, daß der erste Abschnitt 258 des Bügels 250 aus der Vertiefung 288 in dem Ballastgewichteblock 172 gezogen und aus dessen Bewegungsebene seitwärts geschwenkt werden kann.

Letztlich sind die beim Aufnehmen des Ballastgewichteblockes 172 beschriebenen Vorgänge bezüglich des Anbringens der Hubspindeln 68 und des Verfahrens des Ballastgewichteblockes 172 in umgekehrter Reihenfolge vorzunehmen. Ist der Ballastgewichteblock 172 sodann durch das Einfahren der Hydraulikkolben 100 auf die Aufstandsebene des Ackerschleppers abgelassen, dann kann der Ballastgewichteträger 116 entweder aus dem Hauptrahmen 24 der Geräteanbauvorrichtung 22 gezogen und abseits von dem Ackerschlepper gelagert werden, oder er kann auch dort verbleiben, da er in den Bewegungsbereich der unteren Lenker und des oberen Lenkers nicht eintritt.

**Patentansprüche**

1. Arbeitsfahrzeug, insbesondere Ackerschlepper, mit einer Anschluß- und Kupplungsvorrichtung (22) zum frontseitigen Anbau, die mindestens einen als Hubarm ausgebildeten, vertikal schwenkbaren Winkelhebel (48) aufweist, an dessen einem Schenkel (54) eine anderenends am Arbeitsfahrzeug angeschlossene Betätigungsvorrichtung (84) angreift, wobei das Arbeitfahrzeug einen Rahmen (116) mit Führungsbahnen (168) aufweist, an denen ein Geräte, Gewichte (172) oder dergleichen aufnehmender Zusatzrahmen (164, 284) über an ihm vorgesehene Führungsgegenstücke (164) durch Verbinden mit dem anderen Schenkel (52) des Winkelhebels (48) höhenverstellbar ist, dadurch gekennzeichnet, daß der Zusatzrahmen (164, 284) auf dem Boden absetzbar und aus den Führungsbahnen (168) lösbar, in den Führungsbahnen (168) in eine Betriebslage anhebbar, dort festlegbar und in dieser Lage von dem Schenkel (52) wieder lösbar ist.

2. Anschluß- und Kupplungsvorrichtung nach Anspruch 1, dadurch gekennzeichnet, daß der Zusatzrahmen (164, 284) in einem Gewicht (172) integriert ist.

3. Anschluß- und Kupplungsvorrichtung nach Anspruch 1 oder 2, dadurch gekennzeichnet, daß der Rahmen (116) mit dem Zusatzrahmen (164, 284) gegenüber dem Arbeitsfahrzeug in Richtung der Längsachse des Arbeitsfahrzeuges verschiebbar ist.

4. Anschluß- und Kupplungsvorrichtung nach einem oder mehreren der vorherigen Ansprüche gekennzeichnet durch mindestens einen Hubstrebe (68), wahlweise mit dem Winkelhebel (48) und dem Zusatzrahmen (164, 284) verbindbar ist.

5. Anschluß- und Kupplungsvorrichtung nach Anspruch 4, dadurch gekennzeichnet, daß der Zusatzrahmen (164, 284) in einer angehobenen Stellung im Rahmen (116) über Sperrmittel (136, 140) festsetzbar und der freie Schenkel (52) des Winkelhebels (48) mit einem unteren Lenker einer Geräteanbauvorrichtung verbindbar ist.

6. Anschluß- und Kupplungsvorrichtung nach einem oder mehreren der vorherigen Ansprüche, dadurch gekennzeichnet, daß der mit der Betätigungseinrichtung (84) verbundene eine Schenkel (54) über die Hubstrebe (68) mit dem Zusatzrahmen (164, 284) verbindbar ist und der Rahmen (116) über das Verschwenken des Winkelhebels (48) in Richtung der Längsmittenachse des Arbeitsfahrzeuges verschiebbar ist.

7. Anschluß- und Kupplungsvorrichtung nach einem oder mehreren der vorherigen Ansprüche, wobei die Betätigungseinrichtung (84) ein Hydraulikzylinder ist, dadurch gekennzeichnet, daß der Hydraulikzylinder (84) doppeltwirkend ausgebildet ist.

8. Anschluß- und Kupplungsvorrichtung nach einem oder mehreren der vorherigen Ansprüche, dadurch gekennzeichnet, daß der Rahmen (116) zwei sich in Richtung der Längsmittenachse des Arbeitsfahrzeugs erstreckende Holme (120) aufweist, die verschiebbar zwischen einen Hauptrahmen (24) und das Arbeitsfahrzeug einsetzbar sind.

9. Anschluß- und Kupplungsvorrichtung nach einem oder mehreren der vorherigen Ansprüche gekennzeichnet einen oberen durch Lenker der Geräteanbauvorrichtung, zwischen dem und den unteren Lenkern ein nach vorne offener Freiraum, besteht, wobei der Rahmen (116) mit dem Zusatzrahmen (164, 284) in den Freiraum einsetzbar ist.

10. Anschluß- und Kupplungsvorrichtung nach einem oder mehreren der vorherigen Ansprüche, gekennzeichnet durch mindestens eine Anlagefläche (134), die geneigt, und zwar oben weiter vom Arbeitsfahrzeug weg als unten, verläuft.

11. Anschluß- und Kupplungsvorrichtung nach einem oder mehreren der vorherigen Ansprüche, dadurch gekennzeichnet, daß der Zusatzrahmen (164, 284) derart ausgebildet ist, daß der Schwerpunkt des aufzunehmenden Gerätes oder des aufzunehmenden Gewichtes (172) auf der der Anschluß- und Kupplungsvorrichtung abgelegenen Seite des Anlenkpunktes der Hubstrebe (68) liegt.

12. Anschluß- und Kupplungsvorrichtung nach einem oder mehreren der vorherigen Ansprüche, dadurch gekennzeichnet, daß der Rahmen (116) auf jeder Seite eine Profilschiene (132) aufweist und das Führungsgegenstück (164) als eine das Gewicht (172) durchdringende und seitlich über dieses überstehende Gleitstange (164) ausgebildet ist.

13. Anschluß- und Kupplungsvorrichtung nach einem oder mehreren der vorherigen Ansprüche, gekennzeichnet durch keilförmige Aufnahmerampen (142), die sich über die Breite der Profilschienen (132) und bis zum Anfang der in diesen gebildeten Führungsbahnen (168) erstrecken.

14. Anschluß- und Kupplungsvorrichtung nach einem oder mehreren der vorherigen Ansprüche, dadurch gekennzeichnet, daß am Anfang der Führungsbahnen (168) jeweils eine untere federbelastete Sperre (138) vorgesehen ist, über die die Führungsbahnen (168) in einer Richtung verschließbar sind.

15. Anschluß- und Kupplungsvorrichtung nach einem oder mehreren der vorherigen Ansprüche, dadurch gekennzeichnet, daß die unteren Sperren (138) einen Sperrbolzen (178) mit einem keilförmigen Fußteil (180) aufweisen, der mittels eines Hebels (198) in eine Verriegelungsstellung und eine Entriegelungsstellung bringbar ist und der in der Verriegelungsstellung gegen die Aufnahmerampen (142) unter der Wirkung einer Feder (186) zur Anlage bringbar ist.

16. Anschluß- und Kupplungsvorrichtung nach einem oder mehreren der vorherigen Ansprüche, dadurch gekennzeichnet, daß die Sperrmittel (136, 140) obere Sperren (136) mit einer schwenkbaren Profilplatte (222) enthalten und das Gewicht (172) hakenförmige Ausnehmungen (282) aufweist, wobei die Profilplatten (222) ebenfalls eine Verriegelungs- und eine Entriegelungsstellung einnehmen können und in der Verriegelungsstellung mit der zugehörigen hakenförmigen Ausnehmung (282) in Formschluß bringbar sind.

17. Anschluß- und Kupplungsvorrichtung nach einem oder mehreren der vorherigen Ansprüche, dadurch gekennzeichnet, daß die Profilplatte (222) unter der Kraft eines federbelasteten Hebels (236) in die Ent- und die Verriegelungsstellung bringbar ist.

18. Anschluß- und Kupplungsvorrichtung nach einem oder mehreren der vorherigen Ansprüche, dadurch gekennzeichnet, daß die oberen Sperren (136) im Endbereich der Führungsbahnen (168) angeordnet sind.

19. Anschluß- und Kupplungsvorrichtung nach einem oder mehreren der vorherigen Ansprüche, dadurch gekennzeichnet, daß die Sperrmittel (136, 140) einen Pendelriegel (140) mit einem zweifach gekröpften Bügel (250) enthalten, der in eine in dem Gewicht (172) vorgesehene Vertiefung (288) wahlweise einsetzbar und über Klemmittel (286) an dem Rahmen (116) festlegbar ist.

## Revendications

1. Véhicule utilitaire, en particulier tracteur agricole, comportant un dispositif de raccordement et d'attelage (22) pour l'attelage frontal, qui comporte au moins un levier coudé (48) pouvant pivoter verticalement, conformé en bras de levage, à l'une des branches (54) duquel est appliqué un dispositif d'actionnement (84) raccordé à son autre extrémité au véhicule utilitaire, le véhicule utilitaire comportant un bâti (116) avec des glissières (168) sur lesquelles un bâti supplémentaire (164, 284) recevant des instruments, des poids (172) ou analogues peut être déplacé en hauteur par l'intermédiaire de contre-pièces de guidage (164) qui y sont prévues, par liaison avec l'autre branche (52) du levier coudé (48), caractérisé en ce que le bâti supplémentaire (164, 284) peut être déposé sur le sol et être retiré des glissières (168), peut être élevé dans les glissières (168) jusqu'à une position de fonctionnement, y être immobilisé et être de nouveau séparé de la branche (52) dans cette position.

2. Dispositif de raccordement et d'attelage suivant la revendication 1, caractérisé en ce que le bâti supplémentaire (164, 284) est intégré dans un poids (172).

3. Dispositif de raccordement et d'attelage suivant la revendication 1 ou 2, caractérisé en ce que le bâti (116) peut être déplacé avec le bâti supplémentaire (164, 284) par rapport au véhicule utilitaire dans la direction de l'axe longitudinal du véhicule utilitaire.

4. Dispositif de raccordement et d'attelage suivant une ou plusieurs des revendications précédentes, caractérisé par au moins une entretoise de levage (68) qui peut être reliée à volonté au levier coudé (48) et au bâti supplémentaire (164, 284).

5. Dispositif de raccordement et d'attelage suivant la revendication 4, caractérisé en ce que le bâti (164, 284) peut être immobilisé dans une position élevée dans le bâti (116) au moyen d'organes de blocage (136, 140) et la branche libre (52) du levier coudé (48) peut être reliée à une biellette inférieure d'un dispositif de raccordement d'instruments.

6. Dispositif de raccordement et d'attelage suivant une ou plusieurs des revendications précédentes, caractérisé en ce que l'une des branches (54) reliée au dispositif d'actionnement (84) peut être reliée par l'intermédiaire de l'entretoise de levage (68) au bâti supplémentaire (164, 284), et le bâti (116) peut, par l'entremise du pivotement du levier coudé (48), être déplacé dans la direction de l'axe de symétrie longitudinal du véhicule utilitaire.

7. Dispositif de raccordement et d'attelage suivant une ou plusieurs des revendications précédentes, le dispositif d'actionnement (84) étant un vérin hydraulique, caractérisé en ce que le vérin hydraulique (84) est à double effet.

8. Dispositif de raccordement et d'attelage suivant une ou plusieurs des revendications précédentes, caractérisé en ce que le bâti (116) comporte deux longerons (120) s'étendant dans la direction de l'axe de symétrie longitudinal du véhicule utilitaire, lesquels peuvent être insérés avec translation entre un bâti principal (24) et le véhicule utilitaire.

9. Dispositif de raccordement et d'attelage suivant une ou plusieurs des revendications précédentes, caractérisé par une biellette supérieure du dispositif de raccordement d'instruments, entre laquelle biellette et les biellettes inférieures est formé un intervalle ouvert vers l'avant, le bâti (116) pouvant être inséré dans cet intervalle avec le bâti supplémentaire (164, 284).

10. Dispositif de raccordement et d'attelage suivant une ou plusieurs des revendications précédentes, caractérisé par au moins une surface de contact (134) qui est inclinée, et en fait s'étend en haut plus loin du véhicule utilitaire qu'en bas.

11. Dispositif de raccordement et d'attelage suivant une ou plusieurs des revendications précédentes, caractérisé en ce que le bâti supplémentaire (164, 284) est conformé de telle façon que le centre de gravité de l'instrument à recevoir ou du poids (172) à recevoir se trouve du côté du point d'articulation de l'entretoise de levage (68) opposé au dispositif d'attelage et de raccordement.

12. Dispositif de raccordement et d'attelage suivant une ou plusieurs des revendications précédentes, caractérisé en ce que le bâti (116) comporte de chaque côté une barre profilée (132) et la contre-pièce de guidage (164) se présente sous la forme d'une tige de glissement (164) traversant le poids (172) et en dépassant latéralement.

13. Dispositif de raccordement et d'attelage suivant une ou plusieurs des revendications précédentes, caractérisé par des rampes de réception en coin (142) qui s'étendent sur la largeur des barres profilées (132) et vont jusqu'au début des glissières (168) qui y sont formées.

14. Dispositif de raccordement et d'attelage suivant une ou plusieurs des revendications précédentes, caractérisé en ce qu'on prévoit au début de chacune des glissières (168) un verrou inférieur (138) soumis à l'action d'un ressort permettant de verrouiller les glissières (168) dans une direction.

15. Dispositif de raccordement et d'attelage suivant une ou plusieurs des revendications précédentes, caractérisé en ce que les verrous inférieurs (138) comportent une cheville de blocage (178) avec une section de pied (180) en coin, qui peut être amenée au moyen d'un levier (198) dans une position de verrouillage et une position de déverrouillage et qui peut, dans la position de verrouillage, être amenée, sous l'action d'un ressort (186) au contact des rampes de réception (142).

16. Dispositif de raccordement et d'attelage suivant une ou plusieurs des revendications précédentes, caractérisé en ce que les organes de blocage (136, 140) comprennent des verrous supérieurs (136) avec une plaque profilée pivotante (222) et le poids (172) comporte des évidements en forme de crochets (282), les plaques profilées (222) pouvant également prendre une position de verrouillage et une position de déverrouillage et pouvant, dans la position de verrouillage, être accouplées avec concordance de forme avec l'évidement en forme de crochet (282) correspondant.

17. Dispositif de raccordement et d'attelage suivant une ou plusieurs des revendications précédentes, caractérisé en ce que la plaque profilée (222) peut être amenée, sous l'action d'un levier (236) soumis à l'action d'un ressort, dans la position de verrouillage et la position de déverrouillage.

18. Dispositif de raccordement et d'attelage suivant une ou plusieurs des revendications précédentes, caractérisé en ce que les organes de blocage supérieurs (136) sont placés dans la zone terminale des glissières (168).

19. Dispositif de raccordement et d'attelage suivant une ou plusieurs des revendications précédentes, caractérisé en ce que les organes de blocage (136, 140) comprennent un pêne oscillant (140) avec un étrier à double coude (250) qui peut être introduit à volonté dans un creux (288) prévu dans le poids (172) et être immobilisé sur le bâti (116) au moyen d'organes de blocage (268).

**Claims**

1. Working vehicle, especially agricultural tractor, with an attachment and coupling device (22) for front end mounting, which comprises at least one vertically pivoting cranked lever (48) formed as lift arm, with one arm (54) engaged by an operating device (84) connected at the other end to the working vehicle, wherein the working vehicle has a frame (116) with guideways (168), on which an auxiliary frame (164, 284) receiving an implement, weight (172) or the like is, via guide counterparts (164) provided thereon, adjustable in height by attachment to the other arm (52) of the cranked lever (48), characterized in that the auxiliary frame (164, 284) can be set on the ground and is disengageable from the guideways (168), can be raised into the guideways (168) into a working position, can be there fixed and can be released again from the arm (52) in this position.

2. Attachment and coupling device according to claim 1, characterized in that the auxiliary frame (164, 284) is integrated in a weight (172).

3. Attachment and coupling device according to claim 1 or 2, characterized in that the frame (116) is displaceable with the auxiliary frame (164, 284) relative to the working vehicle in the direction of the longitudinal axis of the working vehicle.

4. Attachment and coupling device according to one or more of the preceding claims, characterized by at least one lift link (68), which is selectively attachable to the cranked lever (48) and the auxiliary frame (164, 284).

5. Attachment and coupling device according to claim 4, characterized in that the auxiliary frame (164, 284) can be fixed in a raised position in the frame (116) by locking means (136, 140) and the free arm (52) of the cranked lever (48) can be connected to a lower link of an implement attachment device.

6. Attachment and coupling device according to one or more of the preceding claims, characterized in that the one arm (54) connected to the operating device (84) can be connected via the lift link (68) with the auxiliary frame (164, 284) and the frame (116) can be displaced in the direction of the longitudinal axis of the working vehicle by swinging the cranked lever (48).

7. Attachment and coupling device according to one or more of the preceding claims, wherein the operating device (84) is a hydraulic cylinder, characterized in that the hydraulic cylinder (84) is double acting.

8. Attachment and coupling device according to one or more of the preceding claims, characterized in that the frame (116) comprises two beams (120) extending in the direction of the longitudinal central axis of the working vehicle and which are fitted slidably between a main frame (24) and the working vehicle.

9. Attachment and coupling device according to one or more of the preceding claims, characterized by an upper link of the implement attachment device, between which and the lower links there exists a free space open to the front, wherein the frame (116) with the auxiliary frame (164, 284) can be fitted into the free space.

10. Attachment and coupling device according to one or more of the preceding claims, characterized by at least one abutment surface (134) which extends at an inclination, namely further away from the working vehicle at the top than at the bottom.

11. Attachment and coupling device according to one or more of the preceding claims, characterized in that the auxiliary frame (164, 284) is so formed that the centre of gravity of the implement to be received or of the weight (172) to be received lies on the side of the link point of the lift link (68) away from the attachment and coupling device.

12. Attachment and coupling device according to one or more of the preceding claims, characterized in that the frame (116) comprises on each side a profiled rail (132) and the guide counterpart (164) is formed as a sliding rod (164) passing through the weight (172) and projecting laterally beyond this.

13. Attachment and coupling device according to one or more of the preceding claims, characterized by wedge-shaped receiving ramps (142), which extend over the width of the profiled rails (132) and up to the beginning of the guideways (168) formed therein.

14. Attachment and coupling device according to one or more of the preceding claims, characterized in that there is provided at the beginning of the guideways (168) at least one lower spring-loaded latch (138), through which the guideways (168) can be closed in one direction.

15. Attachment and coupling device according to one or more of the preceding claims, characterized in that the lower latches (138) comprise a locking pin (178) with a wedge-shaped foot part (180), which can be brought into a locking position and a release position by means of a lever (198) and which can be brought against the receiving ramps (142) in the locking position under the action of a spring (186).

16. Attachment and coupling device according to one or more of the preceding claims, characterized in that the locking means (136, 140) include upper latches (136) with a pivoted profiled plate (222) and the weight (172) has hook-shaped recesses (282), wherein the profiled plates (222) likewise can assume a locking and a release position and can be brought in the locking position into interlocking engagement with the associated hook-shaped recess (282).

17. Attachment and coupling device according to one or more of the preceding claims, characterized in that the profiled plate (222) can be brought into the release position and the locking position under the force of a spring-loaded lever (236).

18. Attachment and coupling device according to one or more of the preceding claims, characterized in that the upper latches (136) are arranged in the end region of the guideways (168).

19. Attachment and coupling device according to one or more of the preceding claims, characterized in that the locking means (136, 140) include a swinging latch (140) with a doubly bent yoke (250), which can be selectively inserted into a depression (288) provided in the weight (172) and which can be fixed on the frame (116) by clamping means (268).

FIG.1

FIG. 2

EP 0 182 229 B1

FIG.4

FIG.3

FIG. 6

FIG. 5

FIG.7